# EUROPÄISCHE PATENTSCHRIFT

(11) **EP 2 621 128 B1**
(45) Veröffentlichungstag und Bekanntmachung des Hinweises auf die Patenterteilung: **28.11.2018**
(21) Anmeldenummer: 13151466.3
(22) Anmeldetag: 16.01.2013
(51) Int. Cl.: H04L 12/26, H04W 24/06

(54) **Verfahren und Vorrichtung zur Selbsthilfe mit mobilen Endgeräten in heterogenen Umgebungen**
Method and apparatus for self-help with mobile terminals in heterogeneous environments
Procédé et dispositif d'aide automatique avec terminaux mobiles dans des environnements hétérogènes

(30) Priorität: 27.01.2012 DE 102012100678
(43) Veröffentlichungstag der Anmeldung: 31.07.2013
(73) Patentinhaber: Deutsche Telekom AG, 53113 Bonn (DE)
(72) Erfinder: Kliche, Ingmar, 10407 Berlin (DE); Minkwitz, Johannes, 10318 Berlin (DE)
(74) Vertreter: 2K Patentanwälte Blasberg Kewitz & Reichel

(56) Entgegenhaltungen:
- WO-A1-2008/052004
- CA-A1- 2 531 579
- US-A1- 2010 128 612
- Khaled Md Shariar: "Network Info II Android download app. Get phone info and net connection info", , 17. Februar 2011 (2011-02-17), XP002697767, Gefunden im Internet: URL:http://getandroidstuff.com/network-inf o-ii-android-download-app-network/# [gefunden am 2013-05-28]
- Glenn Fleischman: "Using Apple's mobile AirPort Utility", , 18. November 2011 (2011-11-18), XP002697768, Gefunden im Internet: URL:http://www.macworld.com/article/116308 4/mobile_airport_utility.html [gefunden am 2013-05-15]

## Beschreibung

Die Erfindung betrifft ein Verfahren, welches mit Hilfe einer Software-Anwendung umgesetzt wird. Es bezieht sich insbesondere auf eine Anordnung mit der Störungen in der heterogenen IT-Umgebung eines Nutzers ermittelt und behoben werden können.

### Überblick über die Erfindung:

Telekommunikationsanbieter im Festnetzbereich nutzen für die Meldung von Netz-Störungen oder Nutzerproblemen und deren Abwicklung Call-Center Mitarbeiter, die die Daten in elektronische Systeme einpflegen und/oder Support leisten. Handelt es sich um Meldungen zu Netzstörungen, können spezielle Geräte des Telekommunikationsanbieters (netzseitige Probes) die Erreichbarkeit definierter Dienste sowie die Verfügbarkeit von Netzkomponenten z.B. DSLAMs testen. Im Allgemeinen ist zur Störungsaufnahme und -beseitigung menschliches Zutun z.B. durch einen Call-Center Mitarbeiter notwendig. Wobei das Testen der eigentlichen Störung häufig automatisiert - aber lediglich von der Netzseite her - abläuft.

Außerdem gibt es bereits clientseitige Anwendungen, die der Nutzer selbst installieren und steuern kann, um ggf. auch die Erreichbarkeit des Internets aus seiner Home-Umgebung zu testen. Stellt der Nutzer eine eingeschränkte Erreichbarkeit fest, muss er wiederum einen Call-Center Mitarbeiter über die Störung informieren. Dieser nimmt die Störung i.d.R. in einem Ticketsystem auf und auf dieser Basis und einer Störungsbeschreibung wird die Behebung eingeleitet.

Andererseits sind teilweise auch browserbasierte Systeme im Einsatz, die dem Nutzer die Möglichkeit geben, Störungsmeldungen selbstständig in ein Ticketsystem einzustellen, was allerdings bei einer eingeschränkten Erreichbarkeit des Internets keine echte Alternative für den Nutzer darstellt.

Letztendlich gibt es bereits Webseiten - auch providerübergreifende -, die einen Überblick über bekannte zentralseitige Störungen (bspw. als Störungsampeln) anbieten und auf denen sich der Nutzer über derartige Störungen informieren kann.

Bekannt sind Verfahren für mobile Endgeräte, die mit Hilfe einer Applikation Selbsthilfe für den Nutzer anbieten, ohne, dass weitere menschliche Hilfestellung, z.B. eines Call-Center Mitarbeiters, geleistet werden muss, wie in WO2009103722 beschrieben. Dieses Verfahren betrifft jedoch Selbsthilfe allein für Probleme mit mobilen Endgeräten und erwähnt nicht die Möglichkeit der Nutzung des mobilen Endgerätes für die Selbsthilfe an anderen IT-Geräten des Nutzers bzw. einer heterogenen IT-Umgebung.

Weiterhin bekannt sind Verfahren zur Selbsthilfe, die ein "Abhören" der mobilen Kommunikation ermöglichen, sobald der Nutzer eine festgelegte Nummer wählt (WO2005081852). Daraufhin werden automatisiert potentielle Lösungsvorschläge für den Nutzer angezeigt. Eine derartige Erfindung betrifft hier allein den mobilen Kommunikationskanal und zielt ebenfalls nicht auf den Support über einen zweiten Kanal (z.B. DSL-Leitung) ab und betrifft auch nicht die weitere IT Umgebung.

Aus der Kaheld Md Shariar :"Network Info II android download app. Get info and net connection info" ist eine Anwendung bekannt, die eine Netzwerkanalyse vornimmt.

Aus dem Glenn Fleischmann "Using Apples mobile Air Port Utility" ist ein Tool zur Verwaltung von Apples AirPort Geräten.
Aus der WO 2008/052004A1 ist ein Verfahren zur Steuerung der von Access Points bekannt.

Die CA 2531 579 ist ein Verfahren zum Testen einer Netzwerkverbindung.

Die US 2010/0128612A1 offenbart ein Verfahren zur Diagnose von Problemen in IPV6 Stacks.

### Überblick über die Erfindung:

Wünschenswert wäre eine automatisierte Lösung zur Störungsprüfung und -feststellung, zur Störungsannahme und Anreicherung mit Detailinformation sowie zur Behebung von Störungen und ggf. zur automatischen Konfiguration von Komponenten der IT-Umgebung durch den mobilen oder festen Kommunikationskanal auf Nutzerseite und betreffend dessen heterogene IT Strukturen, um Unterstützung ohne oder mit möglichst geringer menschlicher Interaktion bereitzustellen, Supportaufwand zu verringern sowie dem Nutzer eine schnelle Lösung seines Problems zu liefern.

Im Detail handelt es sich um ein Verfahren zur Einrichtung und/oder Überprüfung eines Telekommunikationsanschlusses der ein lokales Netzwerk mit einem globalen Netzwerk, vorzugsweises über DSL, ADSL, VDSL, LWL, UMTS, WiMAX, LTE verbindet. Diese lokalen Netzwerke basieren in der Regel auf WLAN oder Ethernet-Verbindungen zwischen den einzelnen Komponenten. Bei den Komponenten handelt es sich in der Regel um PCs, Fernseher, Musik-Wiedergabeanlagen, Drucker und andere Netzwerkkomponenten, wie Switche, Bridges, die miteinander verkabelt bzw. verbunden sind, und über einen Router und/oder ein Modem eine Verbindung zwischen dem lokalen Netzwerk und dem globalen Netzwerk herstellen. Bei dem globalen Netzwerk handelt es sich in der Regel um das Internet, wobei den Routern oder Modems in der Regel ein Zugangsnetz des Telekommunikationsproviders vorgeschaltet ist. Dieses Zugangsnetz arbeitet mit den oben beschriebenen Technologien. Das Zugangsnetzwerk kann sowohl Kabel orientiert als auch Funk orientiert sein. So können zum Beispiel WiMax Technologien oder LTE eingesetzt werden, um dem lokalen Netzwerk einen dauerhaften Zugang zum Internet bzw. zum globalen Netzwerk zu ermöglichen.

Ein weiterer Bestandteil der Erfindung ist ein mobiles Endgerät, das über eine erste Verbindung, vorzugsweise über GSM, UMTS und/oder LTE, zum globalen Netzwerk verfügt, und das über eine zweite Verbindung zum lokalen Netzwerk verfügt. Diese zweite Verbindung wird in der Regel über WLAN- oder ein Bluetoothmodul ermöglicht. Es sind auch Kabel orientierte Ansätze über USB oder Ethernet Kabel denkbar. Entsprechende mobile Geräte sind Smartphones, die sowohl über ein WLAN-Modul bzw. Bluetoothmodul verfügen und zusätzlich über ein GSM, UMTS, 3G, LTE Modul verfügen, das eine paketorientierte Verbindung zum mobilen Netzwerk des Providers bereitstellt und somit zum globalen Netzwerk. Über die WLAN-Verbindung bzw. Bluetoothverbindung wird eine Verbindung zum lokalen Netzwerk hergestellt.
Ein solches Endgerät erlaubt es dem Benutzer bzw. Endkunden des Kommunikationsanschlusses eine Anwendung auf sein Gerät herunter zu laden. Eine solche Anwendung wird in der Regel über Anwendungs-Stores bereitgestellt auch APP-Stores genannt, die für eine Vielzahl von mobilen Endgeräten zur Verfügung stehen.
Basierend auf einer durch einen Endkunden auf das mobile Endgerät heruntergeladenen Anwendung, "APP", wird eine Konnektivität des lokalen Netzwerks mit dem globalen Netzwerk geprüft, indem sowohl die erste Verbindung über das mobile Funknetz zum Router und/oder Modem als auch über die zweite Verbindung über das lokale Netzwerk zum Router und/oder Modem geprüft wird, um ein Ergebnis der Prüfung durch die Anwendung auf dem mobilen Endgerät anzuzeigen. Eine solche Prüfung kann zum Beispiel erfolgen, indem Datenpakete in beide Netzwerke an einen Zielserver/Testserver gesendet werden, dessen Identität bekannt ist. Der Zielserver empfängt Datenpakete, mit einer eindeutigen Kennung, aus denen ersichtlich ist welche Funktion die Pakete beabsichtigen durchzuführen. So können innerhalb der Pakete die Testprozeduren übermittelt werden, die der Zielserver durchführen soll. Der Zielserver ist in der Lage die Datenpakete anhand der Identifikation, die über beide Verbindungen übertragen wurden zusammenzuführen, um entsprechende Auswertungen durchzuführen. Sollten zum Beispiel parallel gesendete Pakete, die über die beiden unterschiedlichen Verbindungen gesendet wurden, nicht oder sehr verspätet ankommen, so ist von einem Netzwerkproblem auszugehen. Der zentrale Server könnte zum Beispiel Antworten über diese Testprozeduren sowohl über die erste Verbindung als auch über die zweite Verbindung in einer redundanten in Form an die Anwendung zurücksenden, so dass auch die Anwendung die Laufzeiten und Verluste in die entgegengesetzte Richtung prüfen kann. Das Endgerät mit der Anwendung kann dadurch erkennen, über welchen Kanal die Pakete nicht korrekt angekommen sind, oder ob es eine Übertragungsschwankung bzw. einen hohen Paketverlust gab. Auch ist es denkbar, dass die Anwendung unterschiedliche Komponenten im Zugangsnetzwerk schrittweise anspricht. So kann zum Beispiel ein Ansatz darin liegen, die nächstliegende Komponente wie zum Beispiel einen Router anzusprechen, um dann weitere Komponenten wie DSL-Zugangs-Knoten anzusprechen, um schließlich Server im Internet zu kontaktieren. Auf diese Weise kann festgestellt werden wo der Fehler gegeben sein mag.

Um ein solches Verfahren zu ermöglichen, bedarf es in der bevorzugten Ausführungsform einer Anwendung, die auf einen TCP/IP Dualstack zugreift, der die gleichzeitige TCP/IP-Verbindung zu zwei Netzwerkinterfaces ermöglicht.

In einer weiteren Alternativen Ausführungsform kann die Anwendung die Konnektivität protokollspezifisch und/oder portspezifisch prüfen, indem testweise Protokoll- oder portspezifische Verbindungen zu einem zentralen Testserver aufgebaut werden und die protokollinterne Rückantwort und/oder Dienstantwort für die Analyse ausgewertet wird. Die Auswertung kann erneut mit Hilfe der mobilen Netzwerkverbindung erfolgen.

In einer weiteren Ausführungsform ist die Anwendung über das lokale Netzwerk in der Lage, vorzugsweise durch UPnP, den Router und/oder dessen Firewall zu konfigurieren, um vorzugsweise temporär Ports auf der Firewall des Routers zu öffnen, um vom Globalen Netzwerk eine Störungsanalyse zu ermöglichen. Durch diesen Ansatz kann erreicht werden, dass ein Zugriff eines Mitarbeiters des Netzwerk-Providers über den Router in das lokale Netzwerk vorstoßen kann, um eine Fehleranalyse, zum Beispiel auf dem Router durchzuführen. Eine solche Steuerung ist vorzugsweise nur mit Routern und Firewalls möglich, die vom Netzwerk Provider bereitgestellt werden, und die ein definiertes Interface bereitstellen. Um einen Missbrauch zu verhindern, verwenden die Anwendung und der Router Zertifikate, die vom Netzwerkprovider bereitgestellt werden. Die Router und Firewalls weisen entsprechende Firmware auf, die spezifisch auf die Anwendung angepasst ist.
Die Anwendung ist in einer weiteren Ausführung in der Lage eine Konfiguration von Komponenten im internen Netzwerk, insbesondere Router, Modem, Mediareceiver, Smartmeter vorzunehmen, um vorzugsweise Parameter dieser anzupassen.
So kann der Endbenutzer auf dem Benutzerinterface der Anwendung angeben, welche Anwendungen er aus dem Internet nutzen will. Will der Anwender zum Beispiel Online-Fernsehen, Video-Streaming, Audio-Streaming oder Voice over IP Anwendungen nutzen, so bedarf es der Überprüfung, ob die Firewall entsprechend konfiguriert wurde, um diese Fähigkeiten bereitzustellen. Der Anwender kann somit eine Reihe von Tests durchführen, um zu sehen, ob seine Konfiguration in der Lage ist, seinem Anforderungsprofil zu genügen. Im Fehlerfalle kann eine automatische Einstellung der Komponenten erfolgen oder es werden Vorschläge gemacht, wie entsprechende Einstellung auf den Routern und der Firewall unter Angabe von detaillierten Konfigurationsinformationen vorzunehmen sind.
In einer weiteren Ausführungsform kann zum Beispiel durch die Auswahl des Menüpunkts "Erstkonfiguration des Router" der Benutzer aufgefordert werden, seine Zugangsdaten auf dem Endgerät in die Anwendung einzugeben, die dann den Router so konfiguriert, dass dieser in Zukunft mit den Zugangsdaten eine automatische Einwahl vornimmt. Die Anwendung erlaubt weiterhin dem Benutzer die Angabe der Netzwerkkomponenten (diese können auch automatisch erkannt werden), so dass die Anwendung dann aus einer zentralen Datenbank über die erste Verbindung spezifische Konfigurationsinformationen herunterlädt und dem Benutzer darstellt, wenn es sich um Hardware handelt die nicht automatisiert konfiguriert werden kann.
Insbesondere kann eine Erstkonfiguration durch Eingabe von Zugangsdaten zum DSL erfolgen.

Weiterhin kann die Anwendung den Firmwarestand der eingesetzten Komponenten im internen Netzwerk abfragen und anhand einer Onlineprüfung in einer zentralen Datenbank diese auf Updates prüfen, um diese dann anzuzeigen und/oder upzudaten.

Auch kann die Anwendung Sicherheitseinstellungen verbessern, indem definierte Ports geschlossen werden, und oder

Aufforderungen zur Ersetzung von Standardpasswörter erzeugen, falls diese immer noch nicht durch den Benutzer geändert wurden.

Störungen, die z.B. im globalen Netzwerk liegen, werden in einer zentralen Datenbank im globalen Netzwerk hinterlegt, so dass die Anwendung von einem zentralen Server im globalen Netz zentralseitige Störungen abfragen und dem Nutzer anzeigen kann, um so eine Erklärung zu geben, wenn der Fehler nicht im Bereich des Nutzers liegt.

In einer weiteren Ausführungsform nimmt die Anwendung über die erste Verbindung automatisch Störungsanalysen, z.B. DSL-Leitungsprüfungen, über das Globale Netzwerk zum Router/Modem vor und empfängt deren Ergebnisse. Diese Leitungsprüfungen, werden in der Regel durch eine Verbindung zu einem zentralen Server angesteuert, der dann wiederum anhand der Kennungen (zum Beispiel Telefonnummer, oder Zugangskennung) eine Leitungsüberprüfung, über die einzelnen Komponenten einleitet.

Ferner kann die Anwendung bei Störungen der Konnektivität Statusinformationen sammeln und automatisiert an einen Störungsannahmeserver senden, wobei vorzugsweise ein Störungsticket übermittelt wird, über das die Meldung eindeutig identifizierbar ist. Ferner ist der Bearbeitungsstatus der Störung über das Störungsticket durch die Anwendung abfragbar.
In den Statusinformationen werden Informationen über Art der Störung, Gerätetypen und/oder Firmwarestand von Komponenten bereitgestellt.

Auch ist es in einer bevorzugten Ausführungsform möglich, dass die Anwendung Über die erste Verbindung einem Supportsystem einen direkten Zugang zum lokalen Netzwerk und dessen Komponenten über die zweite Verbindung gewährt. Somit hat ein Supportmitarbeiter Zugang auf das interne Netzwerk und den Router, auch wenn eine solche Verbindung über das globale Netzwerk nicht mehr gegeben ist. Der Mitarbeiter kann so die einzelnen Komponenten überprüfen und gegebenenfalls manuell konfigurieren. Es besteht somit ein Tunnel in das lokale Netzwerk.

Die Anwendung kann somit nach geeigneter Freigabe durch den Nutzer als Proxy arbeiten und einen Zugriff auf das lokale Netz erlauben, um automatisierte Fehleranalysen der Komponenten und Netzverbindungen im lokalen Netz durchzuführen.

Mit der Erfindung sind somit folgende Möglichkeiten gegeben:
- Eine größtmögliche Unterstützung des Nutzers in einem Supportfall in seiner heterogenen IT-Umgebung durch eine automatisierte, IT-technisch unterstützte Vorqualifizierung bei der Fehlersuche und -analyse oder der (Erst)-Konfiguration von Geräten der IT-Umgebung. Als Supportfall werden damit alle Situationen bezeichnet, in denen die Anwendungen bzw. die IT-Umgebung des Nutzers aus seiner Sicht nicht ihrem erwarteten Verhalten entsprechen.

- Es soll der manuelle Supportaufwand reduziert werden (geringeres zu bearbeitendes Supportaufkommen) bzw. falls dem Nutzer nicht abschließend geholfen werden kann, soll die etwaig notwendige Störungsbehebung erleichtert und damit verkürzt werden.
- Zentralseitige Störungen (z.B. auf gebündelten Kommunikationsstrecken mehrerer Nutzer) sollen automatisch erkannt werden und der Nutzer soll dahingehend informiert werden, dass die Störung nicht ihn allein (bzw. seine IT-Umgebung) betrifft - sondern zentralseitig vorliegt - und deren Behebung im Idealfall bereits eingeleitet ist.

Der Vorteil der oben beschriebenen Verfahrensweisen gegenüber dem Stand der Technik besteht darin, dass
- Vermeintliche Störungen über den noch verbliebenen ungestörten Kommunikationskanal automatisch geprüft und analysiert werden
- Der Nutzer mit der Erfindung auch tiefergehende technische Analysen durchführen kann, auch ohne weitergehende eigene Expertise
- Der Nutzer schnell und direkt Fehler in seiner eigenverantworteten IT Umgebung erkennen und ggf. beheben kann sowie über zentralseitige Störungen informiert wird, sodass das absolute Störungsaufkommen minimiert wird
- Die Störungsbehebung durch die automatisiert abgefragten Informationen (Firmwarestände etc.) unterstützt und zielgerichteter durchgeführt werden kann.

### Figuren Beschreibung:

Es zeigt :
Fig. 1 ein schematisches Netzwerk mit einem Lokalen und Globalen Netzwerk, auf das durch ein Smartphone mit der Anwendung zugegriffen werden kann;
Fig. 2-1 zeigt einen Störungsfall;
Fig. 2-2 zeigt einen Zugriff auf ein Ticketsystem im Falle einer Störung;
Fig. 3-1 zeigt die Behebung der Störung;
Fig. 3-2 zeigt den Zustand nach der Behebung der Störung.

### Detaillierte Beschreibung einer Ausführungsform:

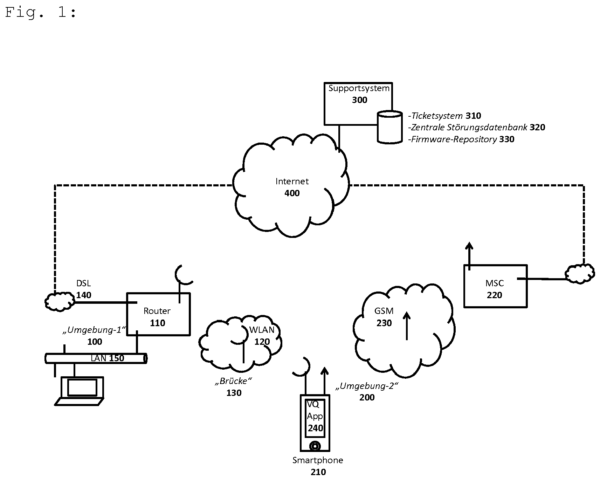

Als Grundlage zur Lösung der Aufgabenstellung wird folgende IT-Umgebung des Nutzers angenommen, wie in Fig. 1 beispielhaft mit der heterogenen Umgebung des Nutzers, sowie Internet und Mobilfunknetz und einem Supportsystem auf Seiten des Telekommunikationsanbieters dargestellt.

Diese Umgebung (Fig. 1) ist gekennzeichnet durch:
- Einen (meist) leitungsgebundenen Telekommunikationsanschluss (DSL, ADSL, VDSL, LWL, UMTS o.ä.) 140 mit einem Modem oder einem Router 110, der als NAT-Gateway dienen kann (IPv4) und in der Regel auch Firewall-Funktionen anbietet. Diese Umgebung bietet unter Umständen auch eine weitergehende LAN-basierte Verkabelung 150 für weitere Geräte (z.B. PCs, NAS-Laufwerke, MediaReceiver, Spielkonsolen). Im Folgenden wird diese Umgebung "Umgebung-1" 100 genannt.
- einem weiteren, von Umgebung-1 100 unabhängigen Kommunikationskanal (z.B. GSM, UMTS oder LTE basierter Datenverbindung) 230 eines dafür vorhandenen Gerätes, welches zusätzlich auch WLAN-Funktionalität 130 bietet (also einem mobilen Endgerät z.B. Smartphone 210). Im Folgenden wird diese Umgebung "Umgebung-2" 200 genannt.
- Eine weitere Verbindung, welche eine Verbindung zur Umgebung-1 100 besitzt z.B. über ein WLAN 120. Ein WLAN 120 wird beispielsweise durch den Router 110 der Umgebung-1 100 ebenfalls bereitgestellt. Im Folgenden wird diese Umgebung "Brücke" 130 genannt. Die Brücke 130 zwischen Umgebung-1 100 und Umgebung-2 200 ist i.d.R. jedoch nicht notwendiger Weise nur eine drahtlose Technologie, wie z.B. WLAN 120, andere drahtlose und/oder leitungsgebundene Nahbereichsprotokolle, wie ZigBee, Bluetooth, NFC, USB o.ä. wären grundsätzlich ebenso möglich.
- das mobile Endgerät (z.B. Smartphone 210) stellt dabei das Endgerät mit dem Nutzerinterface für die erfindungsgemäße Verwendung dar. Die Mobilfunkbasisstation 230 (hier genannt MSC, Mobile Switching Center) dient als Empfangsstation für die Terminierung der Mobilfunkverbindung und bietet für die Datenkommunikation den Übergang zum Internet.
- Unabhängig von der Nutzerumgebung sind weitere Backend Systeme der Betreiber/Provider inkl. der für die Erfindung relevanten Hilfesysteme, dem Supportsystem 300, dem Ticketsystem 310, der zentralen Störungsdatenbank 320 und dem Firmware-Repository 330.

Die Erfindung wird durch eine IT-Anwendung unterstützt. Das in der Anwendung umgesetzte Verfahren wird im Weiteren Vorqualifizierungsanwendung/Anwendung bzw. VQ-App 240 genannt und anhand von Fig. 1 beschrieben:
- das Gerät 210 (z.B. Smartphone) bietet eine Grundkonnektivität in Umgebung-2 sowie - über die Brücke 130 (bspw. WLAN 120) - auch in die Umgebung-1
- das Gerät bietet die Möglichkeit, die VQ-App 240 nachzuladen (220) -z.B. aus einem AppStore oder dem Internet- sowie Informationen aus dem Internet oder von Backendsystemen 300 abzurufen oder dorthin weiterzuleiten. Dies kann über beide Umgebungen erfolgen.
- die VQ-App 240 kann (bspw. mittels UPnP) grundsätzlich die Möglichkeit bieten, von "innen" (d.h. über an den Router übertragene Anweisungen) temporär Ports auf der Firewall des Routers 110 (Umgebung-1) zu öffnen, um von der Netzseite Tests für die Störungsanalyse zu ermöglichen
- die VQ-App 240 kann die grundsätzliche Konnektivität beider Umgebungen prüfen; solange das Endgerät 210 und damit die VQ-App Konnektivität in einer Umgebung besitzt, kann hierüber die Erreichbarkeit des Backbones (i.d.R. des Internets) geprüft werden oder die fehlende Konnektivität in der anderen Umgebung analysiert werden. Hierzu benötigt das Endgerät 210 bzw. die VQ-App einen so genannten Dualstack, also die gleichzeitige Möglichkeit TCP/IP-Verbindungen zu beiden Netzwerkinterfaces (NICs), d.h. in beide Umgebungen, aufzubauen.
- die VQ-App 240 kann die Konnektivität protokollspezifisch (bspw. UDP bzw. einen spezifischen TCP-Port für Multimediaservices) testen. Hierzu werden beispielsweise testweise protokoll- oder portspezifische Verbindungen aufgebaut und die protokollinterne Rückantwort (bei TCP) bzw. eine Dienstantwort (bei UDP) für die Analyse ausgewertet.
- die VQ-App 240 kann über den ungestörten Kommunikationskanal (Umgebung-1 oder Umgebung-2) Informationen über ggf. zentralseitige Störungen abfragen und dem Nutzer anzeigen.
- die VQ-App 240 kann über den ungestörten Kommunikationskanal (Umgebung-1 oder Umgebung-2) automatisch netzseitige Störungsanalysen (bspw. DSL-Leitungsprüfungen) starten und deren Ergebnis empfangen
- die VQ-App 240 kann eine Konfiguration der eingesetzten Komponenten (z.B.Router, Mediareceiver, Smartmeter) vornehmen und z.B. Parameter dieser anpassen. Dies kann auch eine Erstkonfiguration (Zugangsdaten zum DSL 140) sein.
- die VQ-App 240 kann den Firmwarestand der eingesetzten Komponenten (z.B. Router, Mediareceiver, Smartmeter) abfragen und anhand einer Onlineprüfung auf ggf. vorhandene Updates/Bugfixes z.B. über Umgebung-1 prüfen.
- die VQ-App 240 kann ggf. letztendlich Sicherheitseinstellungen verbessern (bspw. Schließen definierter Ports bei bekannten Schwächen o.ä.)
- die VQ-App 240 kann Reports über den Konnektivitätsstatus erstellen und automatisiert an die Störungsannahme - inkl. des Anlegens eines Störungstickets - übermitteln. Bspw. werden dabei die zusammengetragenen Informationen (Art der Störung, Gerätetypen, Firmwarestände) mit bereitgestellt.
- die VQ-App 240 kann offene Tickets abfragen und über den Stand der Störungsbehebung informieren
- die VQ-App 240 kann ebenfalls vergleichbar einem Proxy bspw. einem supportleistenden Mitarbeiter im Callcenter oder einem System einen direkten Zugang auf die Komponenten gewähren, vergleichbar einem Shell-Zugriff. Hierzu arbeitet die VQ-App als Proxy und ermöglicht somit dem Callcenter-Mitarbeiter (nach geeigneter Freigabe durch den Nutzer) den Datenzugriff auf das interne Netz des Kunden und damit beliebige, auch automatisierte, Fehleranalysen der Komponenten des Nutzers bzw. der Netzverbindungen.

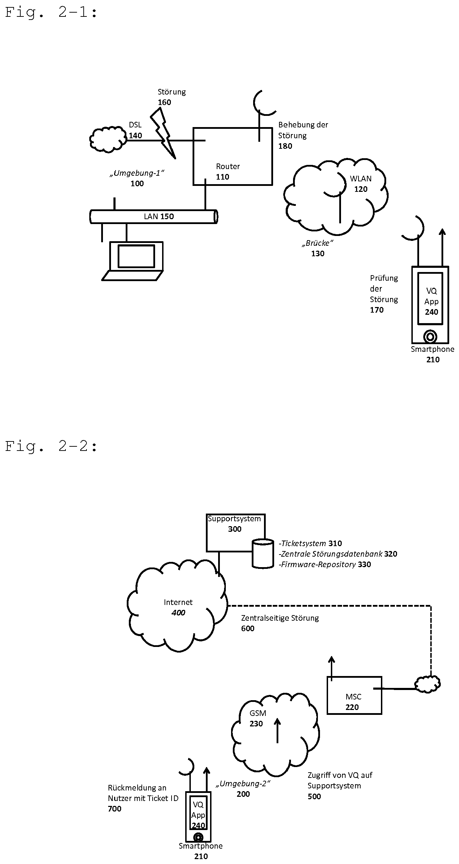

Zur besseren Verdeutlichung soll folgende Beschreibung mit Hilfe der Zeichnungen unterschiedliche Störungsszenarien darstellen und die Abläufe skizzieren:
Das Störungsszenario "Szenario-1" umfasst Fig. 2-1 und Fig. 2-2 und stellt sich folgendermaßen dar:
Für das Szenario wird angenommen, dass mehrere DSL-Leitungen in dem Gebiet aufgrund mechanischer Einwirkung (z.B. Bagger) gestört sind. Der Nutzer stellt einen gestörten Internetzugang fest und beginnt mit dem Start der VQ-App. Die Fehleranalysephase wird in Fig. 2-1 dargestellt. Die Fehlerbehebungsphase in Fig. 2-2.

Fig. 2-1 zeigt die grundsätzlichen Abläufe bei erfindungsgemäßer Anwendung der Erfindung am Beispiel der scheinbar gestörten DSL-Verbindung des Nutzers 160 mit Hilfe eines Smartphones 210 mit WLAN.
- Die Prüfung der Störung 170 erfolgt mit Hilfe der VQ-App 240.
- Hierfür prüft die VQ-App 240 zuerst den Status des Routers 110 und der DSL Leitung 140.
- Der Router 110 ist funktionsfähig und erreichbar, allerdings ist keine DSL-Synchronisierung möglich und somit auch kein Zugang zum Internet.

Für die Erfindung ist es grundsätzlich unerheblich, ob aus Umgebung-1 100 bspw. eine Konnektivitäts-Prüfung für die Umgebung-2 200 erfolgt oder umgekehrt.

In Fig. 2-2 (Fehlerbehebungsphase) ist der weitere Ablauf des Szenario-1 wie folgt dargestellt:
Die VQ-App 240 greift über die Umgebung-2 200 auf das Supportsystem 300 mit der zentralen Störungsdatenbank 320 zu 500.
- und ermittelt in der Störungsdatenbank 320 ob eine zentralseitige Störung vorliegt
- über diesen Kanal erfolgt die Rückmeldung an den Nutzer 700, dass u.a. seine DSL-Leitung gestört ist und ein entsprechendes Supportticket mit einer eindeutigen ID 700 angelegt wurde
- Erst durch die zentralseitige Abfrage erfährt der Nutzer, dass die Störung zentralseitig vorliegt, mehrere Nutzer betrifft und ihm wird rückgemeldet (z.B. über die VQ-App 240 und Smartphone 210), dass die Behebung bereits eingeleitet wurde.

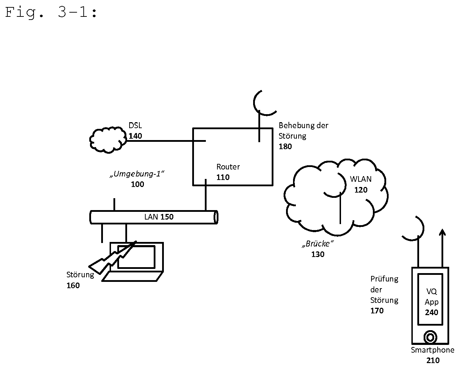

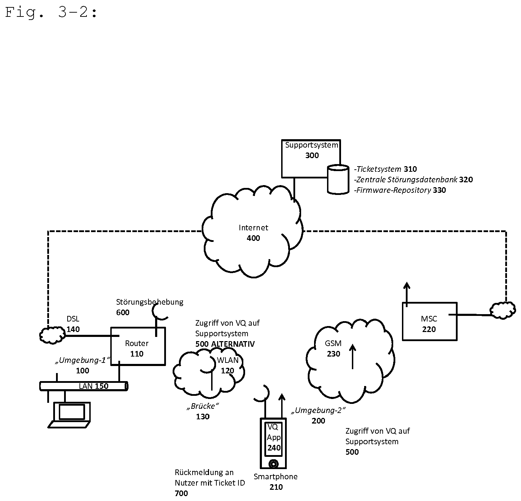

Das Störungsszenario "Szenario-2" umfasst Fig. 3-1 und Fig. 3-2 und stellt sich folgendermaßen dar:
Es wird angenommen, dass begründet mit der höheren Protokoll- und Anwendungs-Komplexität (in Anbetracht verschiedenster Produkt- und Anwendungsebenen, wie Smart-Home, Multimediaservices, E-Health, Smart-Metering) eine gestörte Multimedia-Anwendung vorliegt. Die Fehleranalysephase wird in Fig.3-1 dargestellt. Die Fehlerbehebungsphase in Fig. 3-2.

Fig.3-1 zeigt am Beispiel einer gestörten Multimedia-Anwendung 160 bei ansonsten funktionierendem Internetzugang über DSL 140, wie mit Hilfe der erfindungsgemäßen Anwendung der Erfindung die Störung 160 analysiert wird:
- Mit Hilfe des Endgerätes 210 wird die VQ-App 240 gestartet und prüft zuerst den Status des Routers 110 und der DSL Leitung 140, welche sich grundsätzlich als funktionsfähig erweisen. Diese Tests 170 erfolgen über die "Brücke" 130.
- Anschließend wird festgestellt, dass der Router 110 der Umgebung-1 100 derart konfiguriert ist, dass ein für die Multimediaanwendung benötigter Port in der Firewall gesperrt ist. Die VQ-App versucht ihrerseits, die von der nicht funktionsfähigen Multimediaanwendung angefragten Dienste im Netz (des Providers bzw. im Internet) zu erreichen. Sind die netzseitigen Dienste - im Gegensatz zur allgemeinen Internetverfügbarkeit - für die VQ-App ebenfalls nicht erreichbar, ist von einer Sperrung des Ports / des Protokolls in der kundeneigenen Firewall auszugehen bzw. die Firewall lässt sich über die entsprechenden Protokolle (bspw. UPnP) durch die Multimediaanwendung nicht umkonfigurieren.
- Weiterhin ermittelt die App 240 Informationen über die Firmwareversion des Routers

In Fig. 3-2 (Fehlerbehebungsphase) ist der weitere Ablauf des Szenarios-2 wie folgt dargestellt:
Es wird zentralseitig nach einer Lösung gesucht wobei dies auf Grund des in Szenario-2 ansonsten ungestörten Internetzugangs über den Mobilfunkkanal 500 oder alternativ über den drahtgebundenen Weg 500-ALTERNATIV erfolgen kann.
- Es wird nach vorhandenen Firmwareupdates im Firmwarerepository 330 gesucht und diese ggf. eingespielt.
- Falls möglich öffnet die VQ-App 240 die für den Mediazugriff benötigten Ports in der Firewall zur Störungsbehebung 600 oder versendet alternativ ein entsprechendes Störungsticket 700 über mindestens eine der zur Verfügung stehenden Umgebungen.

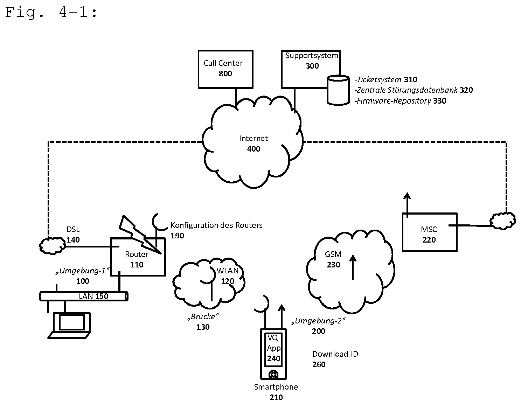

Das Störungsszenario "Szenario-3" stellt sich folgendermaßen dar, siehe Fig. 4-1:
Es wird angenommen, dass der DSL-Anschluss 140 des Kunden eine Erst- bzw. Grundkonfiguration (Zugangsdaten, Parameter, Eckwerte) benötigt. Der Kunde ist nicht in der Lage die Konfiguration seines Internetzugangs 140 selbst vorzunehmen und ggf. weitere Mehrwertdienste (bspw. Multimediaservices) zu konfigurieren. Der Kunde ruft beim Callcenter 800 an oder löst einen Supportcall aus der VQ-App aus, über welche dem Callcenter-Mitarbeiter ein Direktzugriff über die VQ-App 240 ermöglicht wird (siehe oben; Direktzugriff, Dualstack und Proxy). Alternativ kann ihm ein ID (Identifier) für den sicheren Download 260 der Erst- bzw. Grundkonfiguration mitgeteilt werden. (Grundsätzlich kann die ID auch bereits - bspw. mit den Vertragsunterlagen - dem Kunden im Vorfeld übermittelt worden sein.)

Im diesem alternativen Fall wird die ID in die VQ-App 240 eingegeben bzw. an sie übertragen (durch den Callcenter-Mitarbeiter oder den Kunden). Diese ID wird zur Authentifikation an einem Repository (Verzeichnis) 330 benutzt, um das kundenspezifische Konfigurationsfile dort zu generieren oder ein Vorkonfektioniertes herunterzuladen.

Über die VQ-App 240 wird die Grundkonfiguration aus dem Repository 330 in den DSL-Router 110 geladen. Als Voraussetzung ist dafür eine funktionsfähige WLAN-Verbindung (Brücke 130) zwischen Smartphone 210 und Router 110 notwendig. WLAN-Konfigurationen sind bei heutigen WLANfähigen Routern über Verfahren wie Stick & Surf nutzerfreundlich und einfach möglich.

Die Fehleranalyse- und behebungsphase wird in Fig.4-1 dargestellt.
- Dieses Szenario geht davon aus, dass die Brücke (WLAN 120) funktionsfähig eingerichtet ist. Das smartphone 210 ist dort erfolgreich angemeldet und kann parallel eine Internetverbindung über ein mobiles Netz 230 nutzen.
- Um die gesuchte Erst- bzw. Grundkonfiguration des DSL-Zugangs 190 vorzunehmen, löst der Kunde einen Supportcall aus. Dies kann auf herkömmlichem Weg über das Festnetztelefon, das Smartphone 210 oder aus der bereits installierten VQ-App 240 über einen Daten- oder Sprachanruf erfolgen.
- Ist die VQ-App 240 noch nicht installiert, wird der Kunde vom Callcenter-Mitarbeiter diesbzgl. entsprechend geführt und unterstützt.
- Die gestartete VQ-App 240 kann als Proxy arbeiten und dem Supportmitarbeiter einen Direktzugriff auf die Umgebung-1 (über die Brücke 130) ermöglichen. Hierzu kann der Nutzer über die VQ-App einen Supportcall auslösen und den Supportmitarbeiter für den Direktzugriff legitimieren. Der Supportmitarbeiter lädt über diesen Direktzugriff das entsprechende Grundkonfigurationsfile 190 in die Komponenten 110 hoch.
- Alternativ teilt der Supportmitarbeiter dem Kunden eine ID 260 mit, die dieser in die VQ-App 240 eingibt. Damit erfolgt der sichere und authentifizierte Download des Grundkonfigurationsfiles in die VQ-App 240 aus einem zentralen netzseitigen Repository 330.
- Woraufhin die VQ-App 240 das heruntergeladene Konfigurationsfile 190 dann an den Router überträgt und anschließend die erfolgreiche Übernahme der Grundkonfiguration bzgl. des funktionierenden Internetzugangs über die DSL-Verbindung 140 des Routers 110 prüft.
- Letztendlich wird dem Nutzer über die VQ-App 240 ein Feedback über den Status der Erstkonfiguration gegeben.
- In nachfolgenden Schritten können neben dem Router weitere Komponenten (bspw. Multimediareceiver) analog konfiguriert und auch mit den entsprechenden Zugangsdaten versehen werden. Über die funktionsfähige DSL-basierte Internetverbindung kann nach Konfiguration der Multimediadienste ein Funktionstest angestoßen werden.

## Patentansprüche

1. Verfahren zur Einrichtung und/oder Überprüfung eines Telekommunikationsanschlusses (140), der ein lokales Netzwerk (100) mit einem globalen Netzwerk, vorzugsweise über DSL, ADSL, VDSL, LWL, UMTS, verbindet, umfassend
- einen Router und/oder ein Modem (110), das die Verbindung zwischen dem lokalen Netzwerk und dem globalen Netzwerk herstellt,
- ein mobiles Endgerät (130), das eine erste Verbindung , vorzugsweise über GSM,UMTS und/oder LTE, direkt zum globalen Netzwerk herstellt, und das eine zweite Verbindung direkt zum lokalen Netzwerk (100) herstellt, so dass beide Verbindungen unabhängig parallel bestehen,
wobei
basierend auf einer durch einen Endkunden auf das mobile Endgerät herunterladbaren Anwendung, "APP", wobei die Anwendung auf einen TCP/IP Dualstack zugreift, der die gleichzeitige TCP/IP-Verbindung zu zwei Netzwerkinterfaces der beiden Verbindungen ermöglicht,
die Anwendung über die zweite Verbindung den Status des Routers und/oder Modems (110) bestimmt, und auf der Basis des Status
eine Konnektivität des lokalen Netzwerks mit dem globalen Netzwerk geprüft wird, indem sowohl die erste TCI/IP Verbindung von Seiten des Globalen Netzwerks zum Router und/oder Modem (110) als auch über die zweite TCP/IP-Verbindung über das lokale Netzwerk zum Router und/oder Modem (110) geprüft wird, um ein Ergebnis der Prüfung durch die Anwendung auf dem mobilen Endgerät anzuzeigen.

2. Das Verfahren nach Anspruch 1, wobei die Anwendung die Konnektivität protokollspezifisch und/oder portspezifisch, prüft, indem testweise protokoll- oder portspezifische Verbindungen aufgebaut und die protokollinterne Rückantwort und/oder Dienstantwort für die Analyse ausgewertet wird.

3. Das Verfahren nach einem oder mehreren der vorhergehenden Ansprüche, wobei die Anwendung über das lokale Netzwerk in der Lage ist, durch UPnP, den Router und/oder dessen Firewall zu konfigurieren, um temporär Ports auf der Firewall des Routers (110), (Umgebung-1) zu öffnen, um vom Globalen Netzwerk eine Störungsanalyse zu ermöglichen.

4. Das Verfahren nach einem oder mehreren der vorhergehenden Ansprüche, wobei die Anwendung von einem zentraler Server im globalen Netz zentralseitige Störungen abfragt und dem Nutzer anzeigt.

5. Das Verfahren nach einem oder mehreren der vorhergehenden Ansprüche, wobei die Anwendung über die erste Verbindung automatisch Störungsanalysen, z.B. DSL-Leitungsprüfungen, über das Globale Netzwerk zum Router/Modem startet und deren Ergebnis empfängt.

6. Das Verfahren nach einem oder mehreren der vorhergehenden Ansprüche, wobei die Anwendung eine Konfiguration von Komponenten im internen Netzwerk, Router, Modem, Mediareceiver, Smartmeter vornimmt, und vorzugsweise Parameter dieser anpasst, insbesondere kann eine Erstkonfiguration durch Eingabe von Zugangsdaten zum DSL erfolgen.

7. Das Verfahren nach dem vorhergehenden Anspruch, wobei die Anwendung den Firmwarestand der eingesetzten Komponenten im internen Netzwerk abfragt und anhand einer Onlineprüfung in einer zentralen Datenbank diese auf Updates prüft, um diese dann anzuzeigen und/oder upzudaten.

8. Das Verfahren nach der vorhergehenden zwei Ansprüche, wobei die Anwendung Sicherheitseinstellungen verbessert, indem definierte Ports geschlossen werden, und oder Standardpasswörter ersetzt werden.

9. Das Verfahren nach einem oder mehreren der vorhergehenden Ansprüche, wobei die Anwendung bei Störungen der Konnektivität Statusinformationen sammelt und automatisiert an einen Störungsannahmeserver sendet, wobei vorzugsweise ein Störungsticket übermittelt wird, über das die Meldung eindeutig identifizierbar ist, und/oder wobei der Bearbeitungsstatus der Störung über das Störungsticket abfragbar ist.

10. Das Verfahren nach dem vorhergehenden Anspruch, wobei in den Statusinformationen Informationen über die Art der Störung, Gerätetypen und/oder Firmwarestand von Komponenten bereitgestellt werden.

11. Das Verfahren nach einem oder mehreren der vorhergehenden Ansprüche, wobei die Anwendung über die erste Verbindung einem Supportsystem einen direkten Zugang zum lokalen Netzwerk und dessen Komponenten über die zweite Verbindung gewährt.

12. Das Verfahren nach dem vorhergehenden Anspruch, wobei die Anwendung als Proxy arbeitet und nach geeigneter Freigabe durch den Nutzer einen Zugriff auf das lokale Netz erlaubt, um automatisierte Fehleranalysen der Komponenten und Netzverbindungen im lokalen Netz durchzuführen.

13. Ein mobiles Endgerät, vorzugsweise ein mobiles Smartphone, **gekennzeichnet, durch** eine implementierung einer Anwendung nach einem oder mehreren der vorhergehenden Verfahrensansprüche.

14. Das mobile Endgerät nach dem vorhergehenden Anspruch, **dadurch gekennzeichnet, dass** die Anwendung als APP auf ein mobiles Endgerät über einen APP-Store herunterladbar ist.

## Claims

1. Method for establishing and/or checking a telecommunications connection (140) connecting a local area network (100) to a global network, preferably via DSL, ADSL, VDSL, LWL, UMTS, comprising
- a router and/or a modem (110) establishing the connection between the local network and the global network,
- a mobile terminal (130) which establishes a first connection, preferably via GSM, UMTS and/or LTE, directly to the global network, and which establishes a second connection directly to the local network (100), so that both connections exist independently in parallel,
wherein
based on an application "APP" downloadable to the mobile terminal by an end user, the application accessing a TCP/IP dual stack enabling the simultaneous TCP/IP connection to two network interfaces of the two connections,
the application determines the status of the router and/or modem (110) via the second connection, and
on the basis of the status a connectivity of the local network with the global network is tested by testing both the first TCI/IP connection from the global network side to the router and/or modem (110) and via the second TCP/IP connection via the local network to the router and/or modem (110) to indicate a result of the testing by the application on the mobile terminal.

2. The method according to claim 1, wherein the application tests a connectivity protocol and/or port specific, by establishing protocol or port specific connections on a test basis and evaluating the protocol internal response and/or service response for analysis.

3. The method according to one or more of the preceding claims, wherein the application, via the local area network, is capable of configuring, through UPnP, the router and/or its firewall to temporarily open ports on the firewall of the router (110), (environment 1), to enable error analysis from the global network.

4. The method according to one or more of the preceding claims, wherein the application interrogates central faults from a central server in the global network and notifies the user.

5. The method according to one or more of the preceding claims, wherein the application automatically starts and receives the result of interference analyses, e.g. DSL line tests, over the first connection to the router/modem via the global network and automatically receives the result of these analyses.

6. The method according to one or more of the preceding claims, wherein the application configures components in the internal network, router, modem, media receiver, smartmeter, and preferably adapts parameters thereof, in particular an initial configuration can be carried out by entering access data to the DSL.

7. The method according to the preceding two claims, wherein the application queries the firmware status of the components used in the internal network and checks them for updates by means of an online check in a central database in order to then display and/or update them.

8. The method according to one or more of the preceding two claims, wherein the application improves security settings by closing defined ports, and/or replacing default passwords.

9. The method according to one or more of the preceding claims, wherein the application collects status information in the event of faults in connectivity and automatically sends it to an error collecting server, wherein preferably an error ticket is transmitted via which the message can be uniquely identified, and/or wherein the processing status of the error can be queried via the error ticket.

10. The method according to the preceding claim, wherein the status information provides information on the type of error, device types and/or firmware status of components.

11. The method according to one or more of the preceding claims, wherein the application grants a support system direct access to the local network and its components via the first connection and to the second connection.

12. The method according to the preceding claim, wherein the application operates as a proxy and, after appropriate grant by the user, allows access to the local network in order to carry out automated error analysis of the components and network connections in the local network.

13. A mobile terminal, preferably a mobile smartphone, **characterized by** an implementation of an application according to one or more of the preceding method claims.

14. The mobile terminal according to the preceding claim, **characterised in that** the application is downloadable as APP to a mobile terminal via an APP store.

## Revendications

1. Un procédé pour établir et/ou vérifier une connexion de télécommunication (140) connectant un réseau local (100) à un réseau mondial, de préférence via DSL, ADSL, VDSL, LWL, UMTS, comprenant
- un routeur et/ou un modem (110) établissant la connexion entre le réseau local et le réseau mondial,
- un terminal mobile (130), qui établit une première connexion, de préférence via GSM, UMTS et/ou LTE, avec le réseau mondial et qui établit une seconde connexion directement avec le réseau local (100), de telle façon que les deux connexions existent en parallèle, indépendamment,
dans lequel, sur la base d'une application « APP » téléchargeable par un utilisateur final sur le terminal mobile, l'application accède à une double couche TCP/IP permettant une connexion TCP/IP simultanée à deux interfaces réseau,
l'application détermine le statut du routeur et/ou du modem (110) via la seconde connexion, et
sur la base du statut, une connectivité du réseau local au réseau mondial est vérifiée à la fois par le test de la première connexion du réseau mondial au routeur et/ou au modem (110) et par le test sur la deuxième connexion TCP/IP via le réseau local au routeur et/ou au modem (110) pour indiquer un résultat du test par l'application sur le terminal mobile.

2. Le procédé selon la revendication 1, dans lequel l'application vérifie un protocole de connectivité et ou spécifique au port, en établissant des connexions de protocole ou des connexions spécifiques au port sur une base de test et en évaluant la réponse interne au protocole et/ou la réponse de service pour une analyse.

3. Le procédé selon une ou plusieurs des revendications précédentes, dans lequel l'application, via le réseau local, est capable de configurer, au travers UPnP, le routeur et/ou son pare-feu pour ouvrir temporairement des ports sur le parefeu du routeur (110), (environnement-1).) pour permettre le dépannage par le réseau mondial.

4. Le procédé selon une ou plusieurs des revendications précédentes, dans lequel l'application interroge un serveur central au sein du réseau global au sujet de défaillances centrales, et le notifie à l'utilisateur.

5. Le procédé selon une ou plusieurs des revendications précédentes, dans lequel l'application démarre automatiquement et reçoit le résultat d'analyse d'interférence, par exemples des tests de ligne DSL, sur la première connexion vers le routeur/modem via le réseau global, et reçoit automatiquement le résultat de ces analyses.

6. Le procédé selon une ou plusieurs des revendications précédentes, dans lequel l'application effectue une configuration de composants dans le réseau interne, en particulier un routeur, un modem, un récepteur multimédia, un smartmètre, et adapte de préférence ses paramètres, en particulier une configuration Initiale peut être réalisée en introduisant des données d'accès au DSL.

7. Le procédé selon la revendication précédente, dans lequel l'application interroge la version du micrologiciel des composants utilisés dans le réseau interne et, sur la base d'une vérification en ligne dans une base de données centrale, vérifie si des mises à jour sont mises à jour afin de les afficher et/ou les mettre à jour.

8. Le procédé selon une ou plusieurs des deux revendications précédentes, dans lequel l'application améliore les paramètres de sécurité en fermant des ports définis, et/ou en remplaçant les mots de passe par défaut.

9. Le procédé selon une ou plusieurs des revendications précédentes, dans lequel l'application collecte des informations d'état en cas d'échec de la connectivité et les envoie automatiquement à un serveur de collecte d'erreurs, dans lequel, de préférence, un ticket d'erreur transmis grâce au message est identifiable de manière unique et/ou dans lequel le traitement du statut de l'erreur peut être demandé via le ticket d'erreur.

10. Le procédé selon la revendication précédente, dans lequel les informations d'état fournissent des informations sur le type de défaut, des types de dispositif et / ou une version de microprogramme de composants.

11. Le procédé selon une ou plusieurs des revendications précédentes, dans lequel l'application fournit, via la première connexion vers la seconde connexion, un accès direct à un système de support au réseau local et à ses composants.

12. Le procédé selon la revendication précédente, dans lequel l'application fonctionne comme un proxy et, lorsqu'elle est libérée de manière appropriée par l'utilisateur, permet un accès au réseau local pour effectuer une analyse automatisée des pannes des composants et des connexions réseau au sein du réseau local.

13. Un terminal mobile, de préférence un téléphone intelligent mobile, **caractérisé par** la mise en oeuvre d'une application selon l'une ou plusieurs des revendications de procédé précédentes.

14. Le terminal mobile selon la revendication précédente, **caractérisé en ce que** l'application est téléchargeable en tant qu'APP sur un terminal mobile via un magasin APP.
